# FASCICULE DE BREVET EUROPEEN

(11) **EP 4 196 388 B1**
(45) Date de publication et mention de la délivrance du brevet: **06.08.2025**
(21) Numéro de dépôt: 21749660.3
(22) Date de dépôt: 10.08.2021
(51) Int. Cl.: B62J 1/00, B29C 70/68, B29L 31/30, B60G 7/00, B29C 70/70

(54) **PROCEDE DE FABRICATION D'UNE PIECE MECANIQUE, LA PIECE OBTENUE ET UN TRIANGLE DE SUSPENSION**
VERFAHREN ZUR HERSTELLUNG EINES MECHANISCHEN TEILS, RESULTIERENDES TEIL UND AUFHÄNGUNGSDREIECK
METHOD FOR MANUFACTURING A MECHANICAL PART, THE RESULTING PART AND A SUSPENSION TRIANGLE

(30) Priorité: 12.08.2020 FR 2008467
(43) Date de publication de la demande: 21.06.2023
(73) Titulaire: HUTCHINSON, 75008 Paris (FR)
(72) Inventeur: VALEMBOIS, Guy, 31650 LAUZERVILLE (FR); BRETON, Etienne, 31750 ESCALQUENS (FR)
(74) Mandataire: Plasseraud IP
(86) Numéro de dépôt international: PCT/EP2021/072301
(87) Numéro de publication internationale: WO 2022/034099

(56) Documents cités:
- EP-A1- 0 729 769
- WO-A1-2019/229596
- DE-B3- 102018 217 910
- FR-A1- 3 067 279
- GB-A- 2 224 248
- US-A- 5 290 079

## Description

La présente invention a pour objet un procédé de fabrication d'une pièce mécanique de liaison et/ou de transmission destinée à être disposée entre deux structures, ainsi que la pièce obtenue et un triangle de suspension.

Dans le domaine de la mécanique, lorsque deux éléments sont mobiles l'un par rapport à l'autre tout en étant solidaires, l'une suspendue à l'autre par exemple, on les relie avec une ou plusieurs pièces destinées à réaliser une liaison, et éventuellement la transmission d'un mouvement.

De telles pièces mécaniques doivent présenter une certaine robustesse et rigidité, et elles sont pour cette raison dans la plupart des cas réalisées en métal, par un procédé de moulage ou de forgeage.

Quel que soit le domaine mécanique considéré, aussi bien, non limitativement, celui de l'automobile que celui de l'aéronautique, on cherche à alléger ces pièces mécaniques, mais en conservant de la rigidité.

L'une des solutions proposées consiste à utiliser des alliages légers et résistants, tels que des alliages de titane, avec pour inconvénient des coûts importants qui, selon la destination des pièces, sont rédhibitoires.

Pour des pièces mécaniques non soumises à des efforts, ou soumises à des efforts limités, il a été proposé de les fabriquer en matériau composite, à savoir qu'elles sont constituées d'un enroulement, de préférence continu, de fibres de renfort noyées dans une matrice thermoformable ou thermodurcissable, ledit enroulement étant adapté pour que les fibres soient disposées selon des orientations préférentielles en vue des directions des sollicitations en traction et/ou en compression.

Si le gain en poids n'est pas contestable, la résistance aux sollicitations peut toutefois montrer des limites, selon l'importance de ces sollicitations.

D'autre part, la fabrication de ces pièces est parfois difficilement automatisable, et se rapproche souvent de l'artisanat, en sorte que les coûts de fabrication restent élevés.

On notera que l'on connaît déjà des procédés de fabrication de pièces, qui associent une armature et une matière plastique moulée, en sorte d'obtenir une pièce plus légère.

Le document EP 0 729 763 présente ainsi un procédé de fabrication un ski ou analogue, dans lequel des renforts longitudinaux sont maintenus dans un moule par des pièces d'entretoisement avant l'injection d'une mousse polyuréthane. Ce procédé permet d'obtenir un ski allégé tout conservant des propriétés de rigidité et de souplesse permettant une déformabilité contrôlée, ce qui n'est pas le but de la présente demande.

On connaît également des procédés de fabrication d'une paroi armée, par moulage d'une matière plastique sur un grillage ou analogue, tel que cela est exposé par exemple dans le document US 5 290 079. Une telle paroi n'est toutefois pas adaptée à la fabrication d'une pièce mécanique de liaison et/ou de transmission.

WO 2019/229596 concerne un support pour le corps humain tel qu'une selle de vélo ou de moto. Ce support comporte un composant de rembourrage, disposé sur un composant de base moulé, et un élément de couverture (ou revêtement), placé autour et recouvrant ledit composant de rembourrage, l'ensemble étant assujetti à une fourche métallique, et permettant d'attacher la selle au cadre du véhicule à équiper.

GB 2 224 248 décrit une selle de vélo, comportant une coque creuse réalisée par moulage, dans laquelle sont réalisés des trous pour le passage de rivets de fixation de plaques de renfort.

DE 10 2018 217910 décrit une pièce automobile, réalisée par emboutissage ou pliage d'une tôle, encapsulée partiellement ou totalement dans une matière plastique de protection contre la corrosion. FR 3067279 A1 divulgue un procédé de réalisation d'une pièce en matériau composite, consistant à rajouter une matrice thermoplastique ou thermodurcissable autour d'une préforme constituée d'un treillis de fibres de renfort réalisé par enroulement filamentaire autour des ergots d'un châssis et consistant à enrouler les fibres sur une ou plusieurs bobines internes à la matrice.

La présente invention a pour but de proposer un procédé de fabrication d'une pièce mécanique de liaison et/ou de transmission destinée à être disposée entre deux structures, ainsi que la pièce obtenue, dont le poids est inférieur à celui des pièces similaires réalisées en métal, tout en étant d'une grande résistance et rigidité, et d'un coût de fabrication réduit, du fait notamment d'une fabrication automatisée.

Le procédé de fabrication d'une pièce mécanique de liaison et/ou de transmission destinée à être disposée entre deux structures selon l'invention consiste à réaliser les étapes de la revendication 1.

Le jonc peut présenter des sections différentes, il peut également consister en un tube.

Selon l'invention, le au moins un jonc est métallique et sa conformation est réalisée par déformation.

Selon une autre caractéristique additionnelle du procédé qui ne fait pas l'objet de l'invention, le au moins un jonc est réalisé en un matériau composite.

Un tel jonc composite est de préférence, mais non limitativement, constitué de fibres unidirectionnelles noyées dans une matrice plastique, et sa conformation est réalisée préférentiellement, mais non limitativement, par enroulement.

Selon une autre caractéristique additionnelle du procédé selon l'invention, la matrice plastique est chargée de fibres de renfort.

Selon une autre caractéristique additionnelle du procédé selon l'invention, le au moins un élément adapté à la réalisation d'une interface est incorporé par solidarisation à l'ossature.

Selon une autre caractéristique additionnelle du procédé selon l'invention, le au moins un élément adapté à la réalisation d'une interface consiste en un manchon ou un tube, qui délimite une ouverture réalisée dans la matrice.

Selon une autre caractéristique additionnelle du procédé selon l'invention, préalablement ou postérieurement à la mise en forme du jonc, on soumet celui-ci à une opération de traitement de surface adapté à rendre cette dernière rugueuse.

Selon une autre caractéristique additionnelle du procédé selon l'invention, on pratique sur des segments du ou des joncs des déformations transversales.

Le fait de rendre rugueuse la surface du jonc et/ou de réaliser des déformations transversales, permet de créer des zones d'ancrage accru de la matière plastique moulée.

Du point de vue fabrication, lorsque le jonc est métallique, l'ossature peut être réalisée de manière automatique au moyen d'une machine numérique de cambrage de fil, tandis que les éventuels éléments adaptés à la réalisation d'une interface de la pièce, sont soudés au jonc après cintrage.

Selon une autre caractéristique additionnelle du procédé selon l'invention, on réalise, lors de l'opération de moulage des formes propres à créer sur la pièce des interfaces secondaires.

La présente invention a également pour objet une pièce mécanique de liaison et/ou de transmission destinée à être disposée entre deux structures, conformément à la revendication 8.

Selon un mode de réalisation de l'invention, une telle pièce mécanique est utilisée comme triangle de suspension dans la construction automobile et offre une rigidité et une résistance comparables à celles des triangles en métal existants, tout en étant plus léger.

Les avantages et les caractéristiques du procédé de fabrication et de la pièce selon l'invention, ressortiront plus clairement de la description qui suit et qui se rapporte au dessin annexé, lequel en représente un mode de réalisation non limitatif.

Dans le dessin annexé:
- la figure 1 représente une vue schématique en perspective d'une pièce mécanique de liaison et/ou de transmission obtenue par le procédé de fabrication selon l'invention,
- la figure 2 représente une vue schématique en perspective d'une partie de la même pièce mécanique,
- la figure 3 représente une vue schématique en perspective d'une variante de la même pièce mécanique,
- la figure 4 représente une autre vue schématique en perspective de la même pièce mécanique.
- la figure 5 représente une vue schématique en perspective d'une partie de la même pièce mécanique.

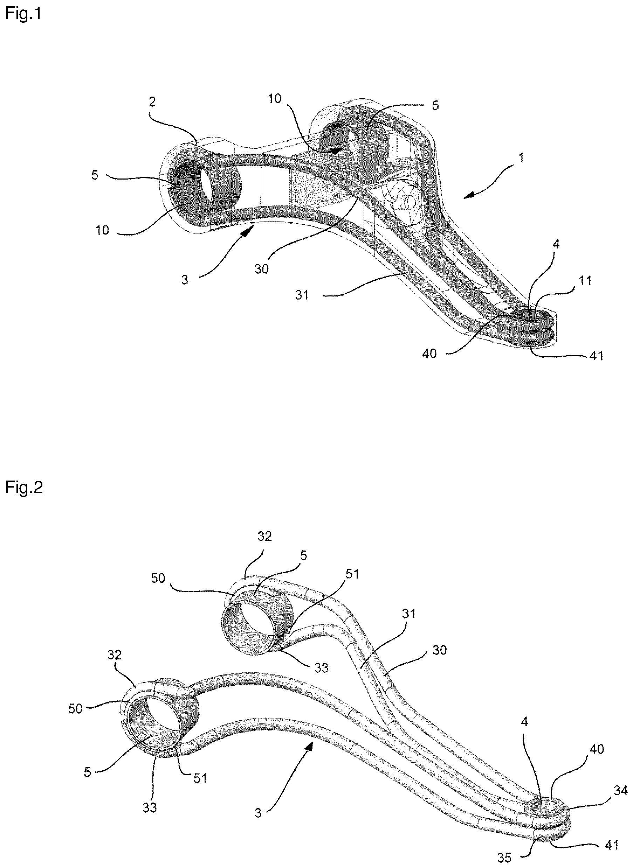

En référence à la figure 1, on peut voir une pièce mécanique 1 selon l'invention, réalisée par le procédé selon l'invention destinée à relier des structures non représentées, en l'occurrence il s'agit d'un triangle de suspension d'un véhicule automobile, permettant de relier une roue à un châssis, et qui est également objet de la présente demande.

Cette pièce 1, qui est ainsi de forme générale triangulaire et présente une certaine épaisseur, comprend une matrice plastique 2 moulée sur une ossature 3, vue en transparence sur cette figure.

Sur la figure 2, est représentée uniquement l'ossature 3, laquelle consiste en deux joncs 30 et 31, en l'occurrence non limitativement métalliques et de section ronde, mis en forme par cintrage pour reproduire le volume de la pièce 1. Les joncs métalliques 30 et 31 sont ainsi déployés dans les trois dimensions pour prendre la forme de la pièce 1 en largeur, en longueur et en épaisseur.

Les joncs 30 et 31 sont associés à des éléments adaptés à la réalisation d'interfaces de la pièce 1 avec l'une ou l'autre des structures à relier, et qui consistent en un tube 4 à collets 40 et 41, et deux manchons 5. Dans ce mode de réalisation particulier, les manchons 5 sont distants et coaxiaux, tandis que le tube 4 est d'axe perpendiculaire à celui des manchons 5.

Comme cela est visible sur la figure 1, après l'opération de moulage de la matrice plastique, les manchons 5 et le tube 4 délimitent des ouvertures respectivement 10 et 11, adaptées à recevoir des moyens de raccordement.

Le jonc 30 relie les deux manchons 5 en passant autour du tube 4 sous le collet 40, tandis que le jonc 31 relie également les deux manchons 5 en passant autour du tube 4 entre le jonc 30 et le collet 41, les deux joncs 30 et 31 étant maintenus à distance l'un de l'autre, distance qui est variable, conforme à l'épaisseur de la pièce 1.

De manière avantageuse, la mise en forme des joncs est réalisée sur une machine numérique de cambrage de fil.

Les deux segments extrêmes 32 du jonc 30 sont solidarisés chacun à un manchon 5, ils sont conformés en arc de cercle et liés au travers d'un cordon de soudure 50, tandis que les deux segments extrêmes 33 du jonc 31 sont solidarisés chacun à un manchon 5, ils sont conformés en arc de cercle et liés au travers d'un cordon de soudure 51.

De même, les joncs 30 et 31 comportent au niveau du tube 4 un segment, respectivement 34 et 35, cintré à 180°, pour entourer le tube 4 entre les collets 40 et 41, la solidarisation étant de préférence complétée d'une soudure.

Les autres segments de l'ossature 3 sont soit rectilignes, soit courbes, et dans des orientations choisies pour procurer à l'ossature 3 et donc à la pièce 1 une résistance optimale à la pression et/ou à la traction, lors des sollicitations auxquelles la pièce 1 doit être soumise.

La matrice plastique 2, moulée sur l'ossature 3, permet de figer cette dernière dans sa configuration la plus aboutie. Les écartements entre les joncs 30 et 31, ou entre les différentes parties de l'ossature 3 sont maintenus même lorsque la pièce 1 est sollicitée.

De manière avantageuse, les joncs 30 et 31 sont, totalement ou en partie et avant opération de moulage, soumis à un traitement de surface permettant de les rendre rugueux, en sorte de renforcer la liaison avec la matrice plastique 2 et ainsi limiter voire supprimer les risques de mouvements relatifs.

Dans le même but, le traitement de surface peut être remplacé ou complété, par la création sur les joncs 30 et 31 en des emplacements de moindre sollicitation, de déformations transversales telles que des bossages ou analogues favorisant un ancrage accru.

La formation des bossages ou analogues est réalisée lors de la mise en forme des joncs 30 et 31, au travers de la machine numérique de cambrage de fil.

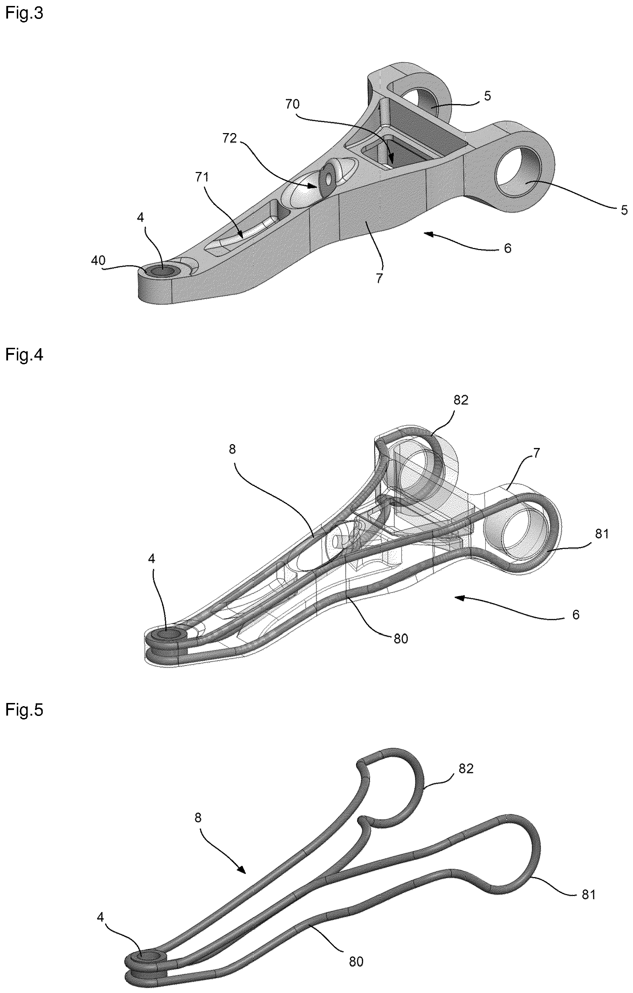

En référence maintenant aux figures 3, 4 et 5, on peut voir une variante du procédé selon l'invention, pour la réalisation d'une pièce 6. Elle comporte également une matrice plastique 7 moulée, ainsi qu'une ossature 8, visible sur les figures 4 et 5, laquelle vient de la déformation d'un seul jonc 80, déformé et conformé en une boucle fermée, les deux extrémités, non visibles, étant aboutées et soudées.

La pièce 6 comporte également des éléments adaptés à la réalisation d'interfaces avec l'une ou l'autre des structures à relier, et qui consistent là encore en un tube 4 et deux manchons 5, avec la différence pour ces derniers qu'ils ne sont pas solidarisés à l'ossature 8.

Le jonc 80 est ainsi cintré pour reproduire le volume de la pièce 6. Il forme notamment deux boucles 81 et 82 coaxiales, destinées chacune à entourer à distance un manchon 5 maintenu dans ultérieurement par la matrice plastique 7.

On notera, comme cela est notamment visible sur la figure 3, que la matrice 7 ne comble pas tout le volume défini par l'ossature 8, mais qu'il subsiste des vides 70 ou creux 71, qui n'interviennent pas dans la résistance de la pièce 6, et qui permettent d'alléger la pièce 6.

De la même manière, le moulage de la matrice 7 permet de mettre en forme la surface de la pièce 6, pour par exemple forme une interface 72 pour la fixation d'un accessoire qui n'intervient pas dans la sollicitation de la pièce 6.

## Revendications

1. Procédé de fabrication d'une pièce mécanique (1 ; 6) de liaison et/ou de transmission destinée à être disposée entre deux structures,
**caractérisé en ce qu'**il consiste à réaliser les opérations successives suivantes :
- réalisation d'une ossature rigide (3 ; 8), par des opérations de conformation d'au moins un jonc ou analogue (30, 31 ; 80), afin de reproduire les formes volumiques de ladite pièce (1 ; 6) et de créer, à des emplacements déterminés, des segments de formes adaptées à l'optimisation de la résistance et de la rigidité de ladite pièce (1 ; 6),
- incorporer à ladite ossature (3 ; 8) au moins un élément (4, 5) adapté à la réalisation d'une interface de ladite pièce (1 ; 6) avec l'une ou l'autre desdites structures,
- mouler une matrice plastique (2 ; 7) autour de ladite ossature (3 ; 8),
**caractérisé en ce que** le au moins un jonc (30, 31 ; 80) est métallique et sa conformation est réalisée par déformation.

2. Procédé de fabrication selon 1a revendication 1, **caractérisé en ce que** la matrice plastique (2 ; 7) est chargée de fibres de renfort.

3. Procédé de fabrication selon l'une quelconque des revendications 1 à 2, **caractérisé en ce que** le au moins un élément (4 ; 5) adapté à la réalisation d'une interface est incorporé par solidarisation à l'ossature (3 ; 8).

4. Procédé de fabrication selon l'une quelconque des revendications 1 à 3, **caractérisé en ce que** le au moins un élément (4 ; 5) adapté à la réalisation d'une interface consiste en un manchon (5) ou un tube (4), qui délimite une ouverture (10, 11) réalisée dans la matrice (2 ; 7).

5. Procédé de fabrication selon l'une quelconque des revendications 1 à 4, **caractérisé en ce que** préalablement ou postérieurement à la mise en forme du jonc (30, 31 ; 80), on soumet celui-ci à une opération de traitement surface adaptée à rendre cette dernière rugueuse.

6. Procédé de fabrication selon l'une quelconque des revendications 1 à 5, **caractérisé en ce qu'**on pratique sur des segments du ou des joncs (30, 31 ; 80) des déformations transversales.

7. Procédé de fabrication selon l'une quelconque des revendications 1 à 6, **caractérisé en ce qu'**on réalise, lors de l'opération de moulage, des formes (72) propres à créer sur la pièce (1 ; 6) des interfaces secondaires.

8. Pièce mécanique (1 ; 6) de liaison et/ou de transmission destinée à être disposée entre deux structures, **caractérisée en ce qu'**elle comporte une matrice plastique (2 ; 7) venant de moulage, à l'intérieur de laquelle est noyée une ossature (3 ; 8) constituée d'au moins un jonc (30, 31 ; 80) conformé à la forme volumique de ladite pièce (1 ; 6), dont certains segments sont disposés et orientés dans le but d'une optimisation de la résistance et de la rigidité de ladite pièce (1 ; 6), et comprenant au moins un élément (4 ; 5) adapté à la réalisation d'une interface de ladite pièce (1 ; 6) avec l'une ou l'autre desdites structures, **caractérisée en ce que** le au moins un jonc (30, 31 ; 80) est métallique et sa conformation est réalisée par déformation.

9. Triangle de suspension, **caractérisé en ce qu'**il consiste en une pièce (1 ; 6) selon la revendication 8.

## Patentansprüche

1. Verfahren zur Herstellung eines mechanischen Verbindungs- und/oder Übertragungsbauteils (16), das dazu bestimmt ist, zwischen zwei Strukturen angeordnet zu werden, **dadurch gekennzeichnet, dass** es die folgenden aufeinanderfolgenden Schritte umfasst:
- Herstellung eines starren Gerüsts (3; 8) durch Vorgänge zur Formgebung wenigstens eines Strangs oder dergleichen (30, 31, 80), um die Volumenformen des Bauteils (1; 6) nachzubilden und an bestimmten Stellen Segmente mit Formen zu schaffen, die zur Optimierung der Festigkeit und Steifigkeit des Bauteils (1; 6) geeignet sind,
- Einbau wenigstens eines Elements (4, 5) in das Gerüst (3; 8), das zur Herstellung einer Schnittstelle des Bauteils (1; 6) mit der einen oder anderen der Strukturen geeignet ist,
- Formen einer Kunststoffmatrix (2; 7) um das Gerüst (3; 8) herum,
**dadurch gekennzeichnet, dass** der wenigstens eine Strang (30, 31; 80) aus Metall besteht und seine Form durch Verformung hergestellt wird.

2. Herstellungsverfahren nach Anspruch 1, **dadurch gekennzeichnet, dass** der Kunststoffmatrix (2; 7) Verstärkungsfasern beigemischt sind.

3. Herstellungsverfahren nach einem der Ansprüche 1 bis 2, **dadurch gekennzeichnet, dass** das wenigstens eine zur Herstellung einer Schnittstelle geeignete Element (4; 5) fest mit dem Gerüst (3; 8) verbunden ist.

4. Herstellungsverfahren nach einem der Ansprüche 1 bis 3, **dadurch gekennzeichnet, dass** das wenigstens eine zur Herstellung einer Schnittstelle geeignete Element (4; 5) aus einer Hülse (5) oder einem Rohr (4) besteht, die bzw. das eine in der Matrix (2; 7) ausgebildete Öffnung (10, 11) begrenzt.

5. Herstellungsverfahren nach einem der Ansprüche 1 bis 4, **dadurch gekennzeichnet, dass** der Strang (30, 31, 80) vor oder nach dem Formen einer Oberflächenbehandlung unterzogen wird, die geeignet ist, diese aufzurauhen.

6. Herstellungsverfahren nach einem der Ansprüche 1 bis 5, **dadurch gekennzeichnet, dass** an Segmenten des Strangs oder der Stränge (30, 31; 80) transversale Verformungen vorgenommen werden.

7. Herstellungsverfahren nach einem der Ansprüche 1 bis 6, **dadurch gekennzeichnet, dass** beim Formvorgang Formen (72) hergestellt werden, die auf dem Teil (1; 6) sekundäre Schnittstellen erzeugen.

8. Mechanisches Verbindungs- und/oder Übertragungsbauteil (1; 6) zur Anordnung zwischen zwei Strukturen, **dadurch gekennzeichnet, dass** es eine aus dem Formprozess stammende Kunststoffmatrix (2; 7) aufweist, in deren Innerem ein Gerüst (3; 8) eingebettet ist, das aus wenigstens einem Strang (30, 31; 80) besteht , der an die Volumenform des Bauteils (1; 6) angepasst ist und wobei bestimmte Segmente zur Optimierung der Festigkeit und Steifigkeit des Bauteils (1; 6) angeordnet und ausgerichtet sind, und umfassend wenigstens ein Element (4; 5), das zur Herstellung einer Schnittstelle des Bauteils (1; 6) mit einer der genannten Strukturen geeignet ist, **dadurch gekennzeichnet, dass** der wenigstens eine Strang (30, 31; 80) metallisch ist und seine Form durch Verformung hergestellt ist.

9. Aufhängungsdreieck, **dadurch gekennzeichnet, dass** es aus einem Teil (1; 6) nach Anspruch 8 besteht.

## Claims

1. Method for manufacturing a mechanical connection and/or transmission part (1, 6) intended to be disposed between two structures,
**characterised in that** it consists in carrying out the following successive operations:
- creating a rigid framework (3, 8), through operations of shaping at least one rod or the like (30, 31, 80), in order to replicate the volume shapes of said part (1, 6) and to create, at determined locations, segments with shapes suitable for optimising the strength and the rigidity of said part (1, 6),
- incorporating into said framework (3, 8) at least one element (4, 5) suitable for creating an interface of said part (1, 6) with either one of said structures,
- moulding a plastic matrix (2, 7) around said framework (3, 8),
**characterised in that** the at least one rod (30, 31, 80) is metallic and the shaping thereof is carried out by deformation.

2. Manufacturing method according to claim 1, **characterised in that** the plastic matrix (2, 7) is charged with reinforcing fibres.

3. Manufacturing method according to any one of claims 1 to 2, **characterised in that** the at least one element (4, 5) suitable for creating an interface is incorporated by securing it to the framework (3, 8).

4. Manufacturing method according to any one of claims 1 to 3, **characterised in that** the at least one element (4, 5) suitable for creating an interface consists of a sleeve (5) or a tube (4), which delimits an opening (10, 11) formed in the matrix (2, 7).

5. Manufacturing method according to any one of claims 1 to 4, **characterised in that**, before or after shaping the rod (30, 31, 80), the latter is subjected to a surface treatment operation suitable for making the latter rough.

6. Manufacturing method according to any one of claims 1 to 5, **characterised in that** transverse deformations are imparted on segments of the rod(s) (30, 31, 80).

7. Manufacturing method according to any one of claims 1 to 6, **characterised in that** shapes (72) suitable for creating secondary interfaces on the part (1, 6) are created during the moulding operation.

8. Mechanical connection and/or transmission part (1, 6) intended to be disposed between two structures, **characterised in that** it includes a moulded plastic matrix (2, 7), inside which a framework (3, 8) is embedded consisting of at least one rod (30, 31, 80) shaped so as to match with the volume shape of said part (1, 6), some segments of which are disposed and oriented so as to optimise the strength and the rigidity of said part (1, 6) and comprising at least one element (4, 5) suitable for creating an interface of said part (1, 6) with either one of said structures, **characterised in that** the at least one rod 30, 31, 80) is metallic and the shaping thereof is carried out by deformation.

9. Suspension triangle, **characterised in that** it consists of a part (1, 6) according to claim 8.
